# FASCICULE DE BREVET EUROPEEN

(11) **EP 1 328 605 B1**
(45) Date de publication et mention de la délivrance du brevet: **12.12.2007**
(21) Numéro de dépôt: 01980064.8
(22) Date de dépôt: 02.10.2001
(51) Int. Cl.: C09K 3/18, C08K 3/04, C08L 27/12, C08L 27/16, C08L 27/18

(54) **COMPOSITION HYDROPHOBE ET UTILISATION SUR UN SUBSTRAT POUR PR VENIR LA FORMATION DE GLACE ET LA CORROSION**
HYDROPHOBE ZUSAMMENSTZUNG UND IHRE VERWENDUNG AUF SUBSTRATEN ZUR VERHINDERUNG VON EISBILDUNG UND KORROSION
HYDROPHOBIC COMPOSITION AND USE ON A SUBSTRATE FOR PREVENTING ICE FORMATION AND CORROSION

(30) Priorité: 02.10.2000 CA 2321345
(43) Date de publication de la demande: 23.07.2003
(73) Titulaire: Hydro-Québec, Montréal, Québec H2Z 1A4 (CA)
(72) Inventeur: ZAGHIB, Karim, Longueuil, Québec J4M 2M7 (CA); BROCHU, Fernand, Longueuil, Québec J4L 3B1 (CA); GUERFI, Abdelbast, Brossard, Québec J4X 1W2 (CA); MASSÉ , Monique, Longueuil, Québec J4L 4T9 (CA); KINOSHITA, Kimio, Cupertino, CA 95014 (US)
(74) Mandataire: Sueur, Yvette
(86) Numéro de dépôt international: PCT/CA2001/001408
(87) Numéro de publication internationale: WO 2002/028981

(56) Documents cités:
- EP-A- 0 829 514
- GB-A- 2 308 368
- US-A- 4 477 608

## Description

### DOMAINE DE L'INVENTION

L'invention concerne des compositions ainsi qu'une méthode d'application sur un substrat pour rendre ce dernier hydrophobe et empêcher la formation et l'accumulation éventuelles de glace sur le substrat, ainsi que sa corrosion. Plus particulièrement, l'invention concerne l'utilisation de particules de graphite, pour rendre un substrat, par exemple un conducteur électrique, hydrophobe, et ainsi prévenir tous dégâts causés par l'accumulation de glace ou la corrosion.

### TECHNIQUE ANTÉRIEURE

Les graphites naturel et artificiel se présentent sous forme de paillette à deux cotés, dont le plan basal et un plan communément appelé "edge". Ces produits, qui sont relativement peu coûteux et qui constituent de bons lubrifiants, sont utilisés pour différentes applications dans l'industrie de l'acier et de l'automobile. Dans le domaine du stockage d'énergie, le composite graphite est connu pour son utilisation comme anode dans les piles rechargeables ou lithium-ion. Dans les graphites, l'intercalation du lithium se fait à travers les plans "edge" et non à travers les plans basaux. Lors de la fabrication des anodes, le procédé passe obligatoirement par l'étape du calandrage, c'est-à-dire un laminage. Cette étape, bien connue de l'homme de l'art, a pour effet d'orienter les particules du graphite selon les plans basaux, ce qui rend la surface de l'anode lubrifiante. Dans l'industrie des piles, l'ajout au composite graphite de particules sphériques métalliques, carbone ou autre, empêche l'orientation des plans basaux lors du calandrage. Les plans basaux du graphite ont une caractéristique hydrophobe qui dépend de la cristallinité du carbone utilisé. Afin d'augmenter cette cristallinité, on peut traiter le carbone à une température supérieure à 1800°C.

GB-A-2.308.368 divulgue des compositions présentant une résistance améliorée aux attaques chimiques. Ces compositions comprennent un élastomère perfluoré et un polymère à base de graphite fluoré ayant la composition (CFₓ)ₙ avec x variant d'environ 0,25 à 1,20 et n est au moins environ 10³, le taux de fluor du graphite fluoré étant au minimum de 28%.

US4,477,608 décrit des compositions utilisables pour fabriques des pièces moulées, lesdites compositions contenant un matériau organique de poids moléculaire élevé contenant de 0,001 à 3% en poids de graphite.

L'accumulation de glace sur les installations électriques ou autres tels que les ponts, lumière de circulation, bateaux, etc., situées dans les régions nordiques constitue un problème majeur qui peut causer des dommages considérables, non seulement sur place, mais sur l'ensemble du réseau. Une telle accumulation, si elle n'est pas contrôlée, crée un poids excédentaire qui peut causer des défaillances sur le réseau électrique de transport et de distribution, et ultimement entraîner de lourdes conséquences étant donné la nature de moteur de l'économie et de la vie publique du réseau électrique. La protection du réseau électrique ainsi que de toute autre installation exposée à l'accumulation de la glace devient donc primordiale. Les approches qui ont été proposées dans le domaine de l'aviation pour empêcher l'accumulation de glace sont de type mécanique, chimique ou thermique. Le graphite a été utilisé dans l'approche thermique sous forme amorphe ("expanded" graphite).

11 existe donc un besoin de recourir à une technique à la fois efficace et peu coûteuse permettant de protéger les lignes de distribution électrique contre la formation de glace par temps froid et la corrosion.

### EXPOSÉ DE L'INVENTION

L'invention a pour objet l'utilisation de la caractéristique lubrifiante du graphite grâce à sa structure laminaire à deux plans, basal et "edge", pour mettre les réseaux électriques à l'abri de la formation de glace et de la corrosion.

L'invention a aussi pour objet d'utiliser le plan basal du graphite qui rend ce dernier hydrophobe dans la lutte contre la formation de glace et la corrosion sur un substrat métallique.

Un autre objet de l'invention consiste à utiliser l'orientation préférentielle basale des particules de graphite pour repousser l'eau de la surface d'un revêtement comprenant du graphite ou du carbone traité à haute température.

L'invention concerne une composition destinée à recouvrir un substrat pour rendre ce dernier hydrophobe et/ou empêcher la formation et l'accumulation éventuelles de glace sur le substrat et la corrosion de ce dernier. La composition comprend des particules ainsi qu'un véhicule dans lequel les particules sont incorporées, et est caractérisée en ce que les particules ont une structure cristalline et elles comportent au moins un plan de clivage les rendant hydrophobes, le graphite ayant une pureté d'au moins 95%, et la teneur en graphite de 5 à 99% en poids. L'invention concerne aussi une méthode d'utilisation de cette composition caractérisée en ce qu'on l'applique sur un substrat et l'on traite la composition ainsi appliquée pour en faire un revêtement hydrophobe et anticorrosif.

### DESCRIPTION BRÈVE DES DESSINS

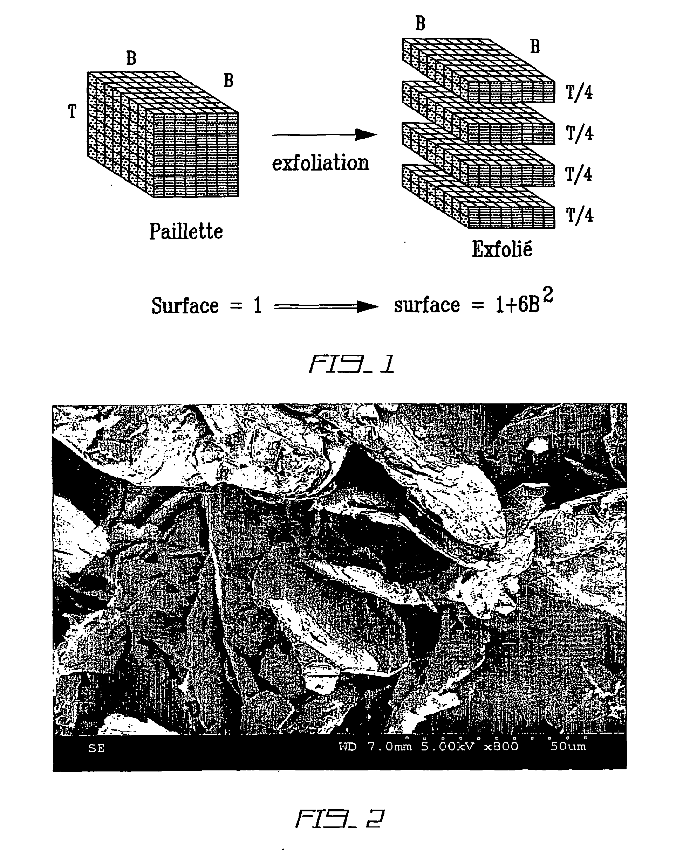

La figure 1 est un schéma illustrant l'exfoliation du graphite; et la figure 2 est un grossissement de particules de graphite exfolié, montrant les plans basaux et "edge".

### DESCRIPTION DÉTAILLÉE DE L'INVENTION

Selon une réalisation préférée de l'invention, les particules sont orientées selon le plan de clivage quand elles sont incorporées dans le véhicule.

Selon un autre mode de réalisation, les particules ont une structure cristalline et possèdent au moins un plan de clivage qui les rend hydrophobes. Par exemple, elles possèdent toutes un plan basal qui les rend hydrophobes.

Les particules comprennent du graphite, les particules étant orientées selon le plan basal. Il y a avantage à ce que le graphite soit à un grand degré de pureté, notamment au moins 99,9%. Il est en effet souhaitable que le graphite ne contienne pratiquement pas de substances provoquant la non conductivité, la corrosion, ou l'oxydation du substrat sur lequel il est déposé. De préférence, on utilisera un graphite exfolié.

Lorsqu'on utilise du graphite dans la composition selon l'invention, il y a avantage à rendre les particules encore plus hydrophobes que ce que leur procure le plan basal. Pour ce faire on peut leur ajouter un composé fluoré de formule CₓF_{y} où x et y sont des nombres entiers (Abdel, bien vérifier ceci c'est bon), notamment (il faudrait donner ici un ou deux exemples).CF, C₂F, C₄F.Ce composé peut diminuer l'effet négatif sur l'hydrophobie des particules particulièrement au niveau des côtés "edge".

On obtiendrait les mêmes résultats en utilisant un composé de formule MF_{z} où M représente un métal alcalin ou alcalino-terreux et z représente 1 ou 2. Par exemple on pourra utiliser CaF₂, BaF₂, LiF ou un mélange de ces derniers. Le graphite tel que purifié par le procédé d'Hydro-Québec (voir PCT/CA01/00233) montre à la surface la présence des composés fluorés hydrophobes de type CaF₂ et autres. Ce qui fait augmenter le taux d'hydrophobicité en utilisant du graphite purifié par ce procédé mentionné dans ce brevet.

Le véhicule comprend avantageusement un polymère hydrophobe capable de former un composite avec les particules.

En pratique, on préfère utiliser des particules de graphite ayant une taille variant entre environ 0,5 µm et 350 µm, un degré de pureté variant entre 95 et 99,99% et une distance interplanaire d002 variant de 3,35 à 3,40.

Selon une autre réalisation préférée de l'invention, la composition comprend une dispersion des particules de graphite décrites dans le paragraphe précédent dans une solution comprenant le polymère hydrophobe agissant de liant avec les particules pour constituer le composite. Avantageusement, le graphite est présent dans la composition à raison de 5 à 95% en poids.

Selon une autre réalisation préférée de l'invention, le polymère comprend du fluorure de polyvinylidène, du chlorure de polyvinyle, ou du polytétrafluoroéthylène ou leur mélange.

La composition selon l'invention peut aussi comprendre une simple dispersion des particules de graphite dans un copolymère statistiquement distribué, notamment un copolymère d'oxyde d'éthylène et d'oxyde de propylène, à raison de 5 à 95% en poids.

La composition peut aussi comprendre une dispersion des particules de graphite avec un liant, de préférence stable aux UV, destiné à constituer le composite. Ce composite est ensuite introduit dans un solvant pour constituer une peinture. Par exemple, le liant peut comprendre un polyester, un polyuréthanne, un polyacrylate ou une paraffine.

La composition peut aussi comprendre un additif favorisant l'écoulement et la flottaison des particules de graphite selon l'orientation basale, notamment le Teflon® ou un stéarate.

Une autre réalisation de l'invention, c'est que la composition comprend notamment un mélange fusionné de poudre de graphite, de résine polymère solide et stable vis-à-vis les UV, et des additifs solides, le mélange étant broyé et conditionné pour application par fusée électrostatique sur un substrat métallique.

Selon une autre réalisation, le type du graphite utilisé est un graphite exfolié. L'utilisation de ce graphite exfolié (figurel), obtenu suivant PCT/CA01/00233, dans le composite augmente la fraction des surfaces basaux et réduit celle des "edges" tel que détaillé dans le modèle (figure 2). De plus, l'ajout du CaF₂ ou autre matériau hydrophobe peut être intéressant pour enrober les côtés "edge" restant afin d'avoir une surface totalement hydrophobe.

Selon une autre réalisation préférée de l'invention, on traite une composition selon l'invention par flottaison, par pression ou par une combinaison flottaison-pression afin d'obtenir l'orientation basale des particules, et on applique la composition ainsi traitée sur un substrat de façon mécanique et/ou électrostatique pour en faire un revêtement hydrophobe et anticorrosif.

Le choix du liant à utiliser dans le composite est important, ce dernier doit aussi avoir la caractéristique hydrophobe (Teflon^{™}, polyester, paraffine ou autre liant). L'optimisation de la taille des particules du graphite joue un rôle important dans l'homogénéité du revêtement et dans l'aspect hydrophobe, comme cela apparaîtra évident pour l'homme de l'art. L'orientation de la particule de graphite selon le plan basal se fait par flottaison ou par pression exercée sur le composite.

Comme on l'a vu ci-dessus, le composite notamment graphite-polymère, peut être utilisé tel quel avec ou sans solvant, ou sous forme de peinture, avec ou sans solvant

Par exemple, si on désire l'utiliser avec un solvant, de la poudre de graphite est dispersée dans une solution utilisant un liant dissout dans un solvant ou un mélange de solvants. Le liant peut être de type fluorure de polyvinylidène (PVDF), chlorure de polyvinyl (PVC), polytétrafluoroéthylène (PTFE) ou autre. La composition peut comprendre de 5% à 95% massique de graphite. L'épandage est fait sur un feuillard ou support par la méthode Doctor Blade^{™}, suivi par le calandrage sur la même ligne. La surface du film devient brillante, signe d'orientation des particules graphite en basal.

Si on préfère utiliser le composite sans solvant, on pourra par exemple disperser de la poudre de graphite dans une solution polymère de type "random" copolymère de l'oxyde d'éthylène et de l'oxyde propylène PEO/PPO. La composition du graphite peut varier entre 5% et 95% massique. L'épandage est fait sur un feuillard ou support par la méthode Doctor Blade^{™}, suivi par le calandrage sur la même ligne. La surface du film devient brillante, signe d'orientation des particules graphite en basal.

En mode peinture avec solvant, la méthode pourrait consister à disperser de la poudre de graphite avec un liant de type polyester, polyuréthanne, acrylate, paraffine ou autre liant stable aux UV, dans un solvant. On ajoute à ce mélange des additifs pour améliorer l'écoulement et la flottaison des particules de graphite selon l'orientation basale. Les additifs sont de type liquide diluant ou de type polymère, tels que le Teflon^{™}, stéarate ou autre. Le pourcentage de graphite dépend de la conductivité désirée.

Une autre façon d'utiliser le mode peinture est d'utiliser le composite sans solvant Par exemple, cette méthode consiste à mélanger et fusionner de la poudre de graphite et de la résine polymère de type polyester, polyuréthanne stable aux UV avec des additifs solides de type Teflon^{®}, stéarate ou autre. Ce mélange de graphite/résine est broyé en poudre. Ce dernier doit être appliqué par fusée électrostatique sur un substrat métallique. Durant la fusion du polymère les particules de graphite s'alignent selon le plan basal.

### EXEMPLES

L'invention va maintenant être illustrée par les exemples qui suivent donnés à la seule fin d'illustrer l'invention et sans caractère limitatif.

### Exemple 1

Le liant PVDF est solubilisé dans le NMP (n-méthyl pyrrolidone). Un mélange des solvants acétone/toluène à 80/20 est ajouté à la pâte PVDF-NMP pour former la composition d'épandage. La poudre de graphite est dispersée dans la composition d'épandage dans un ratio massique de 90:10. Ce mélange est appliqué sur un collecteur de cuivre par la méthode Doctor Blade^{™}. L'électrode est séchée par lampe infrarouge à 65°C, suivi par le calandrage sur la même ligne de fabrication. La surface de ces films de graphite possède des propriétés hydrophobes.

### Exemple 2

Dans cet exemple, on prépare deux mélanges (A) et (B). Le mélange (A) est composé de polyester, résine thermoscellable et 20% de TiO₂ et 2-6% massique de graphite. Le mélange (B) est composé d'une résine thermoplastique et de 10 à 20% massique graphite. Les deux composés sont extrudés et pulvérisés séparément. On mélange 85% du composé (A) avec 15% du composé (B). Cette poudre est appliquée par procédé électrostatique sur un substrat. Ce dernier est exposé à la chaleur afin de fusionner et cuire la poudre.

Bien que la présente invention ait été décrite à l'aide de mises en oeuvre spécifiques, il est entendu que plusieurs variations et modifications peuvent se greffer aux dites mises en oeuvre, et la présente demande vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Composition destinée à recouvrir un substrat pour rendre ce dernier hydrophobe et empêcher la formation et l'accumulation éventuelles de glace sur ledit substrat et la corrosion de ce dernier, ladite composition comprenant des particules de carbone ainsi qu'un véhicule comprenant un polymère hydrophobe dans lequel les particules de carbone sont incorporées, **caractérisée en ce que** lesdites particules de carbone sont des particules de graphite qui ont une structure cristalline et qui possèdent au moins un plan de clivage les rendant hydrophobes, le graphite ayant un degré de pureté variant entre 95% et 99,99%, et la teneur en graphite de la composition étant de 5 à 99% en poids.

2. Composition selon la revendication 1, **caractérisé en ce que** le graphite a un degré de pureté de 95 à 99,9%.

3. Composition selon la revendication 1 ou 2, comprenant des particules de graphite ainsi qu'un véhicule comprenant un polymère hydrophobe dans lequel les particules de graphite sont incorporées, **caractérisée en ce que** lesdites particules de graphite ont une structure cristalline et qu'elle possèdent au moins un plan de clivage les rendant hydrophobes, lesdites particules de graphite étant orientées selon ledit plan de clivage quand elles sont incorporées dans ledit véhicule.

4. Composition selon la revendication 3, **caractérisée en ce que** lesdites particules possèdent un plan basal, le plan basal constituant ledit plan de clivage rendant les particules hydrophobes.

5. Composition selon la revendication 1, **caractérisée en ce que** le graphite comprend du graphite exfolié.

6. Composition selon la revendication 1, **caractérisée en ce que** le graphite utilisé est à 99,9% pur.

7. Composition selon la revendication 1, **caractérisé en ce que** le graphite exfolié comprend des arêtes et que ces dernières sont enrobées par un composé fluoré de formule CₓF_{y} où x et y sont des nombres supérieurs ou égaux à 1.

8. Composition selon la revendication 1, **caractérisée en ce qu'**en plus du graphite, ladite composition comprend un composé fluoré de formule CₓF_{y} où x et y sont des nombres supérieurs ou égaux à 1.

9. Composition selon la revendication 1, **caractérisée en ce qu'**en plus du graphite ladite composition comprend un composé de formule MF_{z} où M est un métal alcalin ou alcalino-terreux et z représente 1 ou 2.

10. Composition selon la revendication 9, **caractérisée en ce que** le composé de formule MF_{z} est choisi parmi CaF₂, BaF₂, LiF ou un mélange de ces derniers.

11. Composition selon l'une des revendications 1 à 3, **caractérisée en ce que** ledit véhicule comprend un polymère hydrophobe capable de former un composite avec lesdites particules.

12. Composition selon la revendication 1, **caractérisée en ce que** les particules sont des particules de graphite ayant une taille variant entre environ 0,5 µm et 350 µm, un degré de pureté variant entre 95 et 99,99% et une distance interplanaire d002 variant de 3,35 à 3,40.

13. Composition selon la revendication 12, **caractérisée en ce qu'**elle comprend une dispersion des particules de graphite dans une solution comprenant ledit polymère agissant comme liant avec lesdites particules pour constituer ledit composite.

14. Composition selon la revendication 13, **caractérisée en ce que** le graphite est présent dans la composition à raison de 5 à 95% en poids.

15. Composition selon la revendication 13, **caractérisée en ce que** le polymère est choisi parmi le fluorure de polyvinylidène, le chlorure de polyvinyle et le polytétrafluoroéthylène.

16. Composition selon la revendication 11, **caractérisée en ce qu'**elle comprend une simple dispersion des particules de graphite dans un copolymère liquide statistique, à raison de 5 à 95% en poids.

17. Composition selon la revendication 16, **caractérisée en ce que** le copolymère est un copolymère d'oxyde d'éthylène et d'oxyde de propylène.

18. Composition selon la revendication 11, **caractérisée en ce qu'**elle comprend une dispersion des particules de graphite dans un solvant comportant un liant destiné à constituer ledit composite.

19. Composition selon la revendication 18, **caractérisée en ce que** ledit liant est stable aux UV.

20. Composition selon la revendication 19, **caractérisée en ce que** ledit liant est choisi parmi un polyester, un polyuréthanne, un polyacrylate et une paraffine.

21. Composition selon la revendication 1, **caractérisée en ce qu'**elle comprend un additif favorisant l'écoulement et la flottaison des particules de graphite selon l'orientation basale.

22. Composition selon la revendication 21, **caractérisée en ce que** l'additif est choisi parmi le tétrafluoroéthylène et un stéarate.

23. Composition selon la revendication 11, **caractérisée en ce qu'**elle comprend un mélange fusionné de poudre de graphite, de résine polymère solide et stable vis-à-vis les UV, et des additifs solides, le mélange étant broyé et conditionné pour application par fusée électrostatique sur un substrat métallique.

24. Méthode de prévention d'accumulation de glace et/ou de formation de corrosion sur un substrat, **caractérisée en ce que** l'on applique une composition selon l'une des revendications 1 à 23 sur un substrat et l'on traite la composition ainsi appliquée pour en faire un revêtement hydrophobe et anticorrosif.

25. Méthode de prévention d'accumulation de glace et/ou de formation de corrosion sur un substrat, **caractérisée en ce que** l'on traite une composition selon l'une des revendications 1 à 23 par flottaison, par pression ou par une combinaison flottaison-pression afin d'obtenir l'orientation basale des particules, on applique ladite composition ainsi traitée sur un substrat de façon mécanique et/ou électrostatique pour en faire un revêtement hydrophobe et anticorrosif.

26. Utilisation d'une composition selon l'une des revendications 1 à 23 pour recouvrir un substrat afin d'empêcher l'accumulation et glace et/ou la formation de corrosion sur ledit substrat.

## Claims

1. Composition intended to coat a substrate to make the latter hydrophobic and prevent possible ice formation and accumulation on said substrate and corrosion of the latter, said composition comprising carbon particles and a vehicle comprising an hydrophobic polymer in which the particles are incorporated, **characterized in that** said carbon particles are graphite particles which have a crystalline structure and at least one cleavage plane making them hydrophobic, the purity level of said graphite being from 95% to 99.99%, and the graphite ratio of the composition being from 5 to 99% by weight.

2. Composition according to claim 1, **characterized in that** the graphite has a purity level of 95 to 99.9%.

3. Composition according to claim 1 or 2, comprising graphite particles and a vehicle comprising an hydrophobic polymer in which the graphite particles are incorporated, **characterized in that** said graphite particles have a crystalline structure and at least one cleavage plane making them hydrophobic, said particles being oriented according to said cleavage plane when they are incorporated in said vehicle.

4. Composition according to claim 3, **characterized in that** said particles have a basal plane, said basal plane forming said cleavage plane which makes the particles hydrophobic.

5. Composition according to claim 1, **characterized in that** the graphite comprises exfoliated graphite.

6. Composition according to claim 1, **characterized in that** the purity level of the graphite is 99.9%.

7. Composition according to claim 1, **characterized in that** the exfoliated graphite comprises edge sides and the latter are coated with a fluorinated compound of formula CₓF_{y} where x and y are numbers higher than or equal to 1.

8. Composition according to claim 1, **characterized in that** in addition to graphite, said composition comprises a compound of formula CₓF_{y} where x and y are numbers higher than or equal to 1.

9. Composition according to claim 1, **characterized in that** in addition to graphite, said composition comprises a compound of formula MF_{z} where M is an alkali or alkaline-earth metal and z is 1 or 2.

10. Composition according to claim 9, **characterized in that** the compound of formula MF_{z} is selected from CaF₂, BaF₂, LiF, or mixtures thereof.

11. Composition according to any of claims 1 to 3, **characterized in that** said vehicle comprises a hydrophobic polymer capable of forming a composite with said particles.

12. Composition according to claim 1, **characterized in that** the particles are graphite particles having a size ranging between approximately 0,5 µm and 350 µm, a purity level ranging between 95 and 99.9%, and an interplanar spacing ranging between 3.35 and 3.40.

13. Composition according to claim 12, **characterized in that** it comprises a dispersion of graphite particles in a solution comprising said polymer acting as a binder for said particles to constitute said composite.

14. Composition according to claim 13, **characterized in that** the graphite is present in the composition in a ratio ranging from 5 to 95% by weight.

15. Composition according to claim 13, **characterized in that** the polymer is selected from polyvinylidene fluoride, polyvinylidene chloride, or polytetrafluoroethylene.

16. Composition according to claim 11, **characterized in that** it comprises a simple dispersion of graphite particles in a random liquid copolymer, in a ratio ranging from 5 to 95% by weight.

17. Composition according to claim 16, **characterized in that** the copolymer is an ethylene oxide and propylene oxide copolymer.

18. Composition according to claim 11, **characterized in that** it comprises a dispersion of graphite particles in a solvent comprising a binder intended to constitute said composite.

19. Composition according to claim 18, **characterized in that** said binder is UV stable.

20. Composition according to claim 19, **characterized in that** said binder is selected from a polyester, a polyurethane, a polyacrylate and paraffin.

21. Composition according to claim 1, **characterized in that** it comprises an additive promoting the flow and the flotation of the graphite particles according to the basal orientation.

22. Composition according to claim 21, **characterized in that** the additive is selected from Teflon^{™} and a stearate.

23. Composition according to claim 11, **characterized in that** it comprises a melted mixture of graphite powder, solid and UV stable polymer resin, and solid additives, the mixture being grinded and conditioned for an application by an electrostatic rocket on a metallic substrate.

24. Method to prevent ice accumulation and/or corrosion formation on a substrate, **characterized in that** a composition according to one of claims 1 to 23 is applied on a substrate and the composition applied is processed to make an hydrophobic and anti-corrosive coating.

25. Method to prevent ice accumulation and/or corrosion formation on a substrate, **characterized in that** a composition according to one of claims 1 to 23 is processed by flotation, by pressure, or by a flotation-pressure combination, to obtain a basal orientation of said particles, said composition thus processed is applied on a substrate mechanically and/or electrostatically to make an hydrophobic and anti-corrosive coating

26. Use of a composition according to any of claims 1 to 23, to coat a substrate to prevent ice accumulation and/or corrosion formation on said substrate.

## Patentansprüche

1. Zusammensetzung zum Auftragen auf ein Substrat zur Hydrophobierung des Letzteren und zur Verhinderung der möglichen Bildung und Ansammlung von Eis auf dem Substrat sowie der Korrosion des Letzteren, wobei die Zusammensetzung Kohlenstoffteilchen sowie einen Träger umfasst, der ein hydrophobes Polymer umfasst, in dem die Kohlenstoffteilchen eingebaut sind, **dadurch gekennzeichnet, dass** die Kohlenstoffteilchen Graphitteilchen sind, die eine Kristallstruktur und zumindest eine Spaltebene aufweisen, die sie hydrophob macht, wobei der Graphit einen Reinheitsgrad zwischen 95 % und 99,99 % aufweist und der Graphitgehalt der Zusammensetzung 5 bis 99 Gew.-% beträgt.

2. Zusammensetzung nach Anspruch 1, **dadurch gekennzeichnet, dass** der Graphit einen Reinheitsgrad von 95 bis 99,9 % aufweist.

3. Zusammensetzung nach Anspruch 1 oder 2, umfassend Graphitteilchen sowie einen Träger, der ein hydrophobes Polymer umfasst, in das die Graphitteilchen eingebaut sind, **dadurch gekennzeichnet, dass** die Graphitteilchen eine Kristallstruktur und zumindest eine Spaltebene aufweisen, die sie hydrophob macht, wobei die Graphitteilchen gemäß der Spaltebene orientiert werden, wenn sie in den Träger eingebaut werden.

4. Zusammensetzung nach Anspruch 3, **dadurch gekennzeichnet, dass** die Teilchen eine Grundfläche aufweisen, wobei die Grundfläche die Spaltebene darstellt, die die Teilchen hydrophob macht.

5. Zusammensetzung nach Anspruch 1, **dadurch gekennzeichnet, dass** der Graphit abgeschieferten Graphit umfasst.

6. Zusammensetzung nach Anspruch 1, **dadurch gekennzeichnet, dass** der eingesetzte Graphit eine Reinheit von 99,9 % aufweist.

7. Zusammensetzung nach Anspruch 1, **dadurch gekennzeichnet, dass** der abgeschieferte Graphit Kanten aufweist und dass Letztere mit einer fluorierten Verbindung der Formel CₓF_{y} bedeckt sind, wobei x und y Zahlen größer als oder gleich 1 sind.

8. Zusammensetzung nach Anspruch 1, **dadurch gekennzeichnet, dass** die Zusammensetzung außer Graphit eine fluorierte Verbindung der Formel CₓF_{y} umfasst, worin x und y Zahlen größer als oder gleich 1 sind.

9. Zusammensetzung nach Anspruch 1, **dadurch gekennzeichnet, dass** die Zusammensetzung außer Graphit eine Verbindung der Formel MF_{z} umfasst, worin M ein Alkalimetall oder Erdalkalimetall ist und z für 1 oder 2 steht.

10. Zusammensetzung nach Anspruch 9, **dadurch gekennzeichnet, dass** die Verbindung der Formel MF_{z} aus CaF₂, BaF₂, LiF oder einem Gemisch davon ausgewählt ist.

11. Zusammensetzung nach einem der Ansprüche 1 bis 3, **dadurch gekennzeichnet, dass** der Träger ein hydrophobes Polymer umfasst, das in der Lage ist, mit den Teilchen einen Verbundstoff zu binden.

12. Zusammensetzung nach Anspruch 1, **dadurch gekennzeichnet, dass** die Teilchen Graphitteilchen mit einer Größe zwischen 0,5 µm und 350 µm, einem Reinheitsgrad zwischen 95 und 99,99 % und einem Ebenenabstand d002 zwischen 3,35 und 3,40 sind.

13. Zusammensetzung nach Anspruch 12, **dadurch gekennzeichnet, dass** sie eine Dispersion der Graphitteilchen in einer Lösung umfasst, die das Polymer enthält, das als Bindemittel für die Teilchen zur Bildung des Verbundstoffs dient.

14. Zusammensetzung nach Anspruch 13, **dadurch gekennzeichnet, dass** der Graphit in einer Menge von 5 bis 95 Gew.-% in der Zusammensetzung enthalten ist.

15. Zusammensetzung nach Anspruch 13, **dadurch gekennzeichnet, dass** das Polymer aus Polyvinylidenfluorid, Polyvinylchlorid und Polytetrafluorethylen ausgewählt ist.

16. Zusammensetzung nach Anspruch 11, **dadurch gekennzeichnet, dass** sie eine einfache Dispersion der Graphitteilchen in einem flüssigen statistischen Copolymer in einer Menge von 5 bis 95 Gew.-% umfasst.

17. Zusammensetzung nach Anspruch 16, **dadurch gekennzeichnet, dass** das Copolymer ein Ethylenoxid-Propylenoxid-Copolymer ist.

18. Zusammensetzung nach Anspruch 11, **dadurch gekennzeichnet, dass** sie eine Dispersion der Graphitteilchen in einem Lösungsmittel umfasst, das ein Bindemittel zur Bildung des Verbundstoffs enthält.

19. Zusammensetzung nach Anspruch 18, **dadurch gekennzeichnet, dass** das Bindemittel UV-beständig ist.

20. Zusammensetzung nach Anspruch 19, **dadurch gekennzeichnet, dass** das Bindemittel aus einem Polyester, einem Polyurethan, einem Polyacrylat und einem Paraffin ausgewählt ist.

21. Zusammensetzung nach Anspruch 1, **dadurch gekennzeichnet, dass** sie ein Additiv umfasst, das die Fließfähigkeit und die Flotation der Graphitteilchen gemäß der Grundorientierung fördert.

22. Zusammensetzung nach Anspruch 21, **dadurch gekennzeichnet, dass** das Additiv aus Tetrafluorethylen und einem Stearat ausgewählt ist.

23. Zusammensetzung nach Anspruch 11, **dadurch gekennzeichnet, dass** sie eine Schmelzmischung aus Graphitpulver, festem und UV-beständigem Polymerharz und festen Additiven umfasst, wobei die Mischung gemahlen wird und zum Auftragen unter Einsatz eines elektrostatischen Zünders auf ein Metallsubstrat angepasst ist.

24. Verfahren zur Verhinderung der Ansammlung von Eis und/oder der Korrosionsbildung auf einem Substrat, **dadurch gekennzeichnet, dass** eine Zusammensetzung nach einem der Ansprüche 1 bis 23 auf ein Substrat aufgetragen wird und die so aufgetragene Zusammensetzung behandelt wird, um daraus eine hydrophobe Antikorrosionsbeschichtung herzustellen.

25. Verfahren zur Verhinderung der Ansammlung von Eis und/oder der Korrosionsbildung auf einem Substrat, **dadurch gekennzeichnet, dass** eine Zusammensetzung nach einem der Ansprüche 1 bis 23 durch Flotation, durch Druck oder durch eine Kombination von Flotation und Druck behandelt wird, um die Grundorientierung der Teilchen zu erzielen, und die so behandelte Zusammensetzung mechanisch und/oder elektrostatisch auf ein Substrat aufgetragen wird, um daraus eine hydrophobe Antikorrosionsbeschichtung herzustellen.

26. Verwendung einer Zusammensetzung nach einem der Ansprüche 1 bis 23 zur Beschichtung eines Substrats, um eine Ansammlung von Eis und/oder Korrosionsbildung auf dem Substrat zu verhindern.
